(19) **Europäisches Patentamt European Patent Office Office européen des brevets**

(11) **EP 3 289 377 B1**

(12) **FASCICULE DE BREVET EUROPEEN**

(45) Date de publication et mention de la délivrance du brevet:
**19.09.2018 Bulletin 2018/38**

(21) Numéro de dépôt: **16719842.3**

(22) Date de dépôt: **27.04.2016**

(51) Int Cl.:
**G01S 5/06** (2006.01)      **G01S 5/02** (2010.01)

(86) Numéro de dépôt international:
**PCT/EP2016/059340**

(87) Numéro de publication internationale:
**WO 2016/174054 (03.11.2016 Gazette 2016/44)**

(54) **SYSTEME DE TRAITEMENT DE SIGNAUX ISSUS D'UN EMETTEUR A DES FINS DE DATATION DE SIGNAUX ET DE LOCALISATION DE L'EMETTEUR ET STATION DE RÉCEPTION ASSOCIÉ**

**SYSTEM ZUR VERARBEITUNG VON SIGNALEN EINES SENDERS ZWECKS DATIERUNG DER SIGNALE UND LOKALISIERUNG DES SENDERS UND ZUGEHÖRIGE EMPFANGSSTATION**

**SYSTEM FOR PROCESSING SIGNALS FROM AN EMITTER FOR THE PURPOSE OF DATING THE SIGNALS AND LOCATING THE EMITTER, AND ASSOCIATED RECEIVING STATION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2015 FR 1553761**

(43) Date de publication de la demande:
**07.03.2018 Bulletin 2018/10**

(73) Titulaire: **ZODIAC DATA SYSTEMS**
**91978 Courtaboeuf Cedex (FR)**

(72) Inventeurs:
• **GUILLOT, Baptiste**
**14680 Fresney Le Puceux (FR)**
• **SAFFRE, Frédéric**
**14320 Saint Andre Sur Orne (FR)**
• **PICARD, Yann**
**14000 Caen (FR)**

(74) Mandataire: **Regimbeau**
**20, rue de Chazelles**
**75847 Paris Cedex 17 (FR)**

(56) Documents cités:
**EP-A2- 0 733 912      WO-A2-99/57575**
**WO-A2-2004/059338**

**Description**

DOMAINE TECHNIQUE GENERAL

L'invention concerne la synchronisation temporelle fine de systèmes de réception de signaux géographiquement distants. En particulier l'invention s'applique au domaine de la localisation d'un émetteur et concerne plus spécifiquement un système de traitement des signaux issus d'un émetteur en vue de dater finement ces signaux pour localiser ledit émetteur. L'invention peut s'appliquer de manière non limitative à des applications tels que la goniométrie, la radiogoniométrie (en anglais « *direction finding* »), ou les systèmes des réceptions de signaux de télécommunications dotés d'antennes multiples (MIMO « *Multiple-Input Multiple-Output* »*,* ou encore SIMO « *Single-Input Multiple-Output* ») qui cherchent à exploiter une pluralité de capteurs pour augmenter la qualité de réception des signaux.

Plus généralement, l'invention concerne les systèmes dotés d'une pluralité de capteurs et dédiés à la réception, l'analyse et l'exploitation de signaux, utilisant à cet effet la diversité des propriétés d'un même signal tel que perçu en des endroits géographiquement différents. En particulier, de tels systèmes contiennent un sous-système de traitement des signaux permettant de dater finement ces signaux afin de pouvoir exploiter de manière adéquate la diversité de propriétés sus-nommées.

ETAT DE LA TECHNIQUE

Pour localiser précisément à distance un objet émettant ou renvoyant un signal, une des principales méthodes utilisées nécessite de mesurer finement l'écart de date de réception d'une même portion de ce signal reçue en plusieurs emplacements.

Afin de mesurer les TDOA (en anglais, « *Time Difference of Arrival* ») et FDOA (en anglais, « *Frequency Difference of Arrival* »), ces portions de signaux datées sont transmises puis comparées par corrélation en temps et fréquence dans une unité de traitement commune. Une technique de datation fine, connue, consiste à recevoir les signaux issus de l'objet à localiser avec un système de réception synchronisé par un récepteur des signaux d'un système de positionnement par satellites dit « GNSS » (en anglais, « *Global Navigation Satellite System* ») comme par exemple GPS, Glonass, Galiléo ou Beidu. Ces récepteurs de signaux d'un système de positionnement par satellites transmettent leur base de temps. Cette base de temps synchronisée sur les signaux d'un système de positionnement par satellites est transmise aux autres récepteurs de signaux qui à leur tour l'utilisent pour dater les enregistrements des signaux d'intérêt. Le document WO2004/059338 concerne un appareil, un système, un procédé et un produit programme d'ordinateur pour la détermination de la localisation d'au moins une image d'un émetteur transmettant un signal. La localisation d'au moins l'image de l'émetteur est déterminée par réception d'un signal transmis par l'émetteur à au moins trois antennes réceptrices séparées par des distances connues. Des différences de temps sont alors déterminées entre la réception du signal à l'une des antennes réceptrices et au moins deux autres antennes réceptrices. Les distances connues et les différences déterminées des temps de réception sont ensuite traitées pour déterminer la localisation de l'émetteur.

Cette technique intègre plusieurs erreurs dans la transmission de la base de temps qui provoquent une erreur de datation absolue.

PRESENTATION DE L'INVENTION

L'invention permet d'améliorer la précision de datation de signaux reçus en plusieurs emplacements.

L'invention permet avantageusement de localiser un émetteur grâce à des enregistrements de signaux, issus de cet émetteur, effectués en des emplacements multiples.

En effet, les erreurs de datation sont en général indépendantes les unes des autres et ne peuvent en particulier pas se compenser dans les cas d'une synchronisation différentielle (*i.e.*, dans le cas où c'est l'écart de datation qui est primordial, notamment pour les applications de localisation d'un émetteur).

Selon un premier aspect, l'invention concerne une station de réception d'un système de traitement de signaux issus d'un émetteur comprenant un premier récepteur configuré pour acquérir des signaux issus de l'émetteur ; un second récepteur configuré pour acquérir des signaux issus d'un système de positionnement par satellites ; la station étant caractérisée en ce que le premier récepteur et le second récepteur sont cadencés par une même horloge locale générant une base de temps locale, les signaux acquis étant datés par ladite base de temps.

La station de réception, selon le premier aspect de l'invention, est avantageusement complétée par les caractéristiques suivantes, prises seules ou en une quelconque de leur combinaison techniquement possible :

Le second récepteur est en outre configuré pour démoduler des signaux issus du système de positionnement par satellites afin d'en extraire la base de temps absolue pour ensuite déterminer la différence entre celle-ci et chaque base de temps locale afin de resynchroniser par rapport à ladite base de temps absolue les signaux issus de l'émetteur.

Le premier récepteur est configuré pour, à partir de la différence entre la base de temps absolue et la base de temps locale, dater les signaux issus de l'émetteur par rapport à la base de temps absolue.

Le premier récepteur est configuré pour acquérir des portions des signaux issus de l'émetteur durant une période prédéfinie dans la base de temps absolue et pour les transmettre à une station de traitement, accompagnées des datations ou des différences de datation desdites portions dans les bases de temps locale et absolue.

Le système de positionnement par satellites comprenant au moins une constellation de satellite, chaque constellation comprenant une pluralité de satellites le second récepteur est configuré pour sélectionner, selon un mode autonome ou supervisé, au moins un satellite parmi la pluralité de satellite d'une des constellations constitutive du système de positionnement par satellites, les signaux acquis par le second récepteur étant issus du ou des satellites sélectionnés.

La sélection consiste à sélectionner, selon un mode autonome, au moins un satellite ayant une élévation supérieure à une valeur seuil, d'une constellation vue.

Le second récepteur est configuré pour générer un indicateur de qualité de réception des signaux issus d'un satellite d'une constellation vue, la sélection, selon un mode autonome, consistant à sélectionner au moins un satellite pour lequel l'indicateur de qualité est supérieur à une valeur seuil.

Le second récepteur est configuré pour recevoir, selon un mode supervisé, une information relative à la sélection d'un satellite provenant d'une station de traitement.

Le second récepteur est configuré pour générer un indicateur de qualité des signaux issus d'un ou plusieurs satellite(s) d'une constellation vue, l'indicateur de qualité étant transmis à la station de traitement, l'information relative à la sélection d'un ou plusieurs satellites étant déterminée à partir de cet indicateur de qualité.

Selon un second aspect, l'invention concerne un système de traitement de signaux issus d'un émetteur comprenant : au moins deux stations de réception selon le premier aspect de l'invention et une station de traitement configurée pour traiter des signaux transmis et datés par les stations de réception.

Le système de traitement selon le second aspect de l'invention est avantageusement complété par les caractéristiques suivantes, prises seules ou en une quelconque de leur combinaison techniquement possible :
La station de traitement comprend une unité de traitement configurée pour calculer des écarts de réception en temps et/ou fréquence entre des portions de signaux identiques issus de l'émetteur.

L'unité de traitement est en outre configurée pour, à partir des écarts de réception calculés, déterminer une localisation de l'émetteur dont sont issus les signaux acquis.

Le second récepteur de chacune des stations de réception est configuré pour sélectionner, selon un mode autonome, au moins un satellite, en visibilité de chacune des stations selon une élévation supérieure à une valeur seuil.

La station de traitement est une des stations de réception.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 illustre un système de traitement de signaux distants issus d'un même émetteur ;
- la figure 2 illustre une station de réception d'un système de traitement de signaux distants issus d'un émetteur selon l'invention ;
- la figure 3 illustre une station de réception d'un système de traitement de signaux distants issus d'un émetteur selon une solution conventionnelle ;

Sur l'ensemble des figures, les éléments similaires portent des références identiques.

DESCRIPTION DETAILLEE DE L'INVENTION

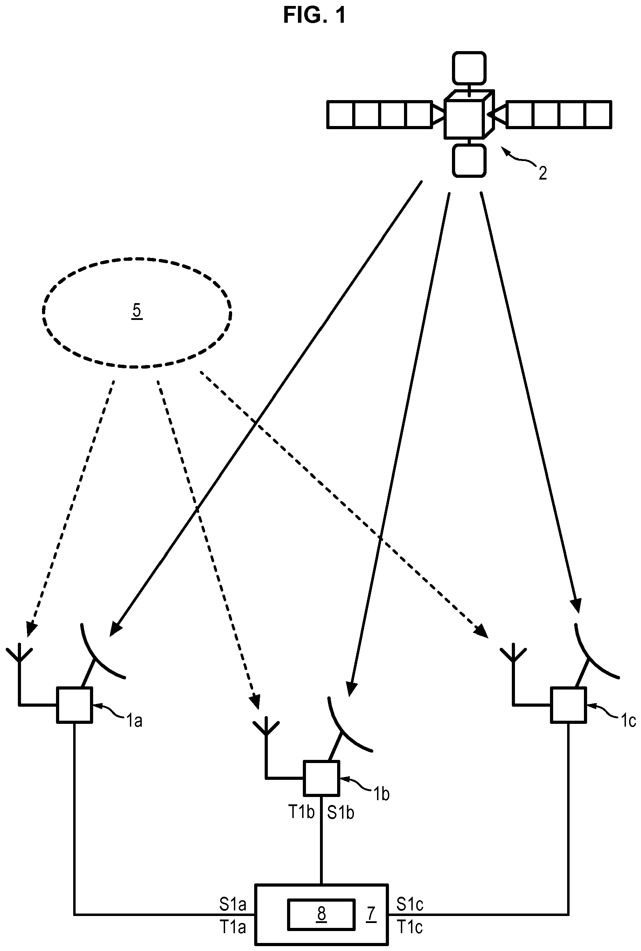

En relation avec **la figure 1**, un système de traitement de signaux issus d'un émetteur 2 comprend au moins deux stations de réception configurées pour acquérir d'une part des signaux issus de l'émetteur 2 et d'autre part des signaux issus d'un ou de plusieurs systèmes 5 de positionnement par satellites dit « GNSS » (par exemple GPS, Glonass ou Galiléo). Sur la figure 1, on a représenté trois stations distantes la, 1b, 1c. L'émetteur 2 est typiquement un satellite que l'on souhaite localiser mais cela peut être un aéronef ou un émetteur terrestre tel qu'un terminal mobile.

Le système de traitement comprend en outre une station 7 de traitement configurée pour recevoir des signaux $S_{1a}$, $S_{1b}$, $S_{1c}$ et leur date respective $T_{1a}$, $T_{1b}$, $T_{1c}$ issus des stations de réception la, 1b, 1c. La station 7 de traitement permet notamment de localiser l'émetteur 2. D'autres applications nécessitant une synchronisation sont possibles.

De manière avantageuse, la station 7 de traitement peut être incluse dans une des stations de réception la, 1b, 1c.

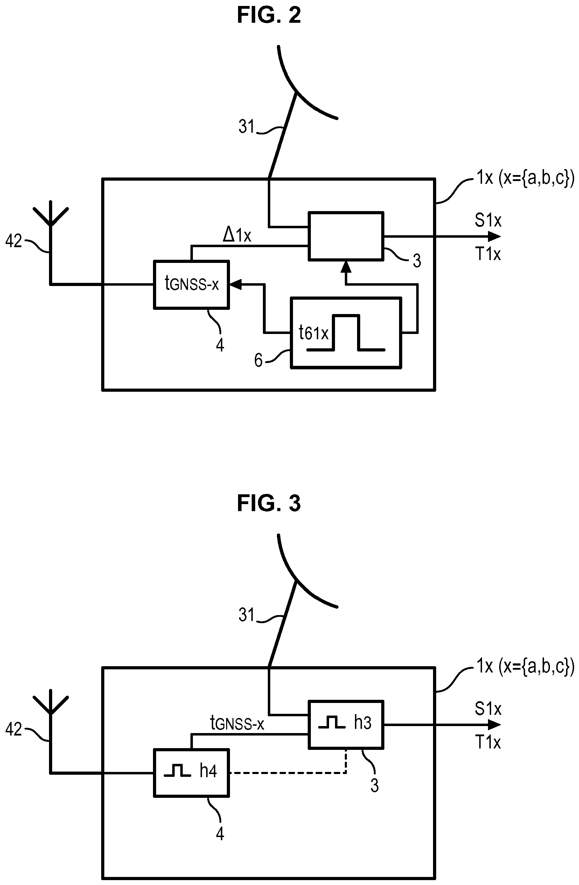

En relation avec la **figure 2**, chaque station de réception 1x (x=a ou b ou c) comprend un premier récepteur 3 configuré pour acquérir des signaux issus de l'émetteur 2 et un second récepteur 4 configuré pour acquérir des signaux issus du système 5 de positionnement par satellites (ci-après signaux GNSS).

Le premier récepteur 3 est connecté à une première antenne 31 et le second récepteur 4 est connecté à une seconde antenne 42. Les premier et second récepteurs 3, 4 peuvent avantageusement être situés dans un même boitier assurant les fonctions respectives des récepteurs 3, 4.

Le premier récepteur 3 et le second récepteur 4 de chacune des stations de réception 1x sont cadencés et datés par une même horloge locale 6x générée localement dans chacune des stations de réception 1x. On note en outre que les horloges locales 6x de chaque station de réception 1x ne sont pas synchronisées entre elles.

On précise ici que l'on entend par « horloge locale » une unité qui permet de déclencher et de cadencer l'échantillonnage des acquisitions par les premier et second récepteurs 3, 4 et qui fournit une datation (référence de temps) commune des échantillons constitutifs de leurs acquisitions respectives. L'acquisition simultanée des signaux GNSS et des signaux de l'émetteur 2 permet, au niveau de chaque station de réception 1a, 1b, 1c de dater précisément chaque signal issu l'émetteur 2.

Tous les satellites d'un système GNSS sont synchronisés entre eux par une base de temps GNSS commune, $t_{GNSS}$ (dite base de temps absolue).

Le premier récepteur 3 de chacune des stations de réception 1x est configuré pour réaliser l'acquisition des signaux $S_{1x}$ (x=a ou b ou c) issus de l'émetteur 2 de manière cadencée et datée par la base de temps $t_{61x}$(x=a ou b ou c) fournies par l'horloge locale 6.

Le second récepteur 4 de chacune des stations de réception 1x est configuré pour traiter les signaux GNSS afin de reconstituer localement, grâce à un traitement et une démodulation des signaux GNSS, la base de temps absolue reconstituée $t_{GNSS-x}$ (x=a ou b ou c). Par ailleurs, en étant cadencé par l'horloge locale 6x, le second récepteur est configuré pour déterminer en permanence une valeur $\Delta_{1x}$(x=a ou b ou c) de l'écart de temps entre la base de temps locale $t_{61x}$ générée par l'horloge locale 6 et la base de temps GNSS reconstituée $t_{GNSS-x}$.

En ajoutant le signal de différence d'horloge $\Delta_{1a}$, $\Delta_{1b}$, $\Delta_{1c}$, la station de réception 1a, 1b, 1c peut convertir tout signal $S_{1a}$, $S_{1b}$, $S_{1c}$ daté selon la base de temps local $t_{61a}$ $t_{61b}$ $t_{61c}$ en signal $S_{1a}$, $S_{1b}$, $S_{1c}$ daté selon la base de temps GNSS reconstituée $t_{GNSS-a}$, $t_{GNSS-b}$, $t_{GNss-c}$ du système GNSS avec une date $T_{1a}$, $T_{1b}$, $T_{1c}$. Les signaux sont donc datés selon la base de temps $t_{GNSS}$ avec une précision réduite à l'erreur de reconstruction effectuée lors de la génération des bases de temps $t_{GNSS-a}$, $t_{GNSS-b}$, $t_{GNSS-c}$. qui est minimale, ce qui permet d'affirmer que les stations de réception 1a, 1b, 1c du système de traitement sont synchronisées en temps et fréquence.

Chaque station de réception 1a, 1b, 1c transmet à la station de traitement 7 les signaux $S_{1a}$, $S_{1b}$, $S_{1c}$, issus de l'émetteur 2 ainsi que leur date reconstituée dans la base de temps $t_{GNSS}$ $T_{1a}$, $T_{1b}$, $T_{1c}$.

Ainsi, contrairement à un système traditionnel, le second récepteur 4 ne reconstruit pas une horloge de référence locale synchronisée à la base de temps GNSS mais calcule un écart de temps permettant de convertir l'horloge locale $t_{61a}$, $t_{61b}$, $t_{61c}$, commune aux récepteurs 3 et 4, en base de temps GNSS absolu $t_{GNSS-a}$, $t_{GNSS-b}$, $t_{GNSS-c}$.

Dans une architecture conventionnelle cette horloge reconstituée serait utilisée pour cadencer le premier récepteur 3. Ainsi, dans ce type d'architecture conventionnelle la synthèse de l'horloge ainsi que son transfert sont des sources importantes d'erreur de synchronisation qui viennent s'ajouter à la précision de reconstitution de la base de temps absolu $t_{GNSS-a}$, $t_{GNSS-b}$, $t_{GNSS-b}$ par le récepteur 4. La **figure 3** illustre une architecture conventionnelle selon laquelle chaque récepteur 3, 4 possède sa propre horloge h3, h4.

L'utilisation de deux récepteurs 3 et 4 identiques cadencés par la même horloge locale 6 permet en revanche de réduire l'erreur de synchronisation entre les premier et second récepteurs 3, 4 à la gigue intrinsèque des convertisseurs analogique-numériques, celle-ci étant très inférieure à celle imposée par un changement de domaine d'horloge qui nécessite la régénération d'un signal d'horloge à partir du traitement des signaux GNSS puis son transfert d'un récepteur à un autre. La précision de synchronisation du récepteur 3 par rapport à la base de temps absolu $t_{GNSS}$ est donc essentiellement réduite à la précision de reconstitution de la base de temps absolu $t_{GNSS-a}$, $t_{GNSS-b}$, $t_{GNSS-b}$ par le récepteur 4.

En revenant à la figure 1, la station 7 de traitement comprend une unité 8 de traitement configurée pour comparer tous les signaux $S_{1a}$, $S_{1b}$, $S_{1c}$ issus de l'émetteur 2 et datés par $T_{1a}$, $T_{1b}$, $T_{1c}$ pour ensuite déterminer un décalage temporel $\Delta t1$, $\Delta t2$ entre deux portions identiques de signal $S_{1a}$, $S_{1b}$, $S_{1c}$ entre deux acquisitions différentes.

Ces décalages temporels sont donc les TDOA, écarts de date de réception d'un même signal émis par l'émetteur 2 reçu par deux stations géographiquement distinctes.

Les TDOA tels que mesurés entre les stations 1a et 1b sont exactement la différence des temps de propagation mis par le signal émis par l'émetteur 2 pour atteindre la station 1a et pour atteindre la station 1b, temps de propagation qui sont exactement déterminés par les modèles physiques connus de déplacement de l'émetteur 2 et de propagation des signaux en provenance de l'émetteur et à destination des stations de réception 1a et 1b, ainsi que des positions géographiques connues très précisément des stations de réception et de la position de l'émetteur 2 à la date d'émission du signal qui elle demeure l'inconnue à déterminer.

En utilisant les coordonnées géographiques précises des stations , les TDOA obtenus depuis au minimum deux paires de stations et pendant une certaine durée de mesure, un modèle de déplacement de l'émetteur 2 ainsi qu'un modèle de propagation des signaux dans le médium séparant l'émetteur 2 des stations de réception, il est alors possible de localiser l'émetteur 2 de manière précise et de déterminer sa trajectoire.

Comme indiqué précédemment les bases de temps absolues reconstituées $t_{GNSS-a}$, $t_{GNSS-b}$, $t_{GNSS-c}$ sont considérées identiques. Toutefois, une erreur de synchronisation absolue peut subvenir. Cette erreur de synchronisation est ramenée à une erreur de gigue $ErrGigue_x$ (x=a ou b ou c) (qui est une erreur de différence de transfert du temps $T_{61a}$ aux premier et au second récepteurs 3,4) et à l'erreur de reconstruction ($t_{GNSSx} - t_{GNSS}$).

Ainsi, si l'on s'intéresse à la précision de synchronisation différentielle Delta T entre deux stations de réception 1a1b par exemple on obtient :

$$Delta\ T = (t_{GNSS\ a} + ErrGigue_a\ ) - (t_{GNSS\ b} + ErrGigue_b\ )$$

$$= ((t_{GNSS\ a} - t_{GNSS}) - (t_{GNSS\ b} - t_{GNSS}) + (ErrGite_{a} - ErrGigue_b)$$

$$= (ErrRecGNSS_a - ErrRecGNSS_b) + (ErrGigue_{a} - ErrGigue_b)$$

où ErrRecGNSSa est le signal erreur de reconstruction du temps GNSS dans le récepteur 3 de la station la.

Comme les erreurs liées à la giguepeuvent être ramenées à des niveaux très faibles en comparaison des erreurs de reconstruction, le terme prépondérant de l'erreur de synchronisation est la différence d'erreur de reconstruction $t_{GNSSa} - t_{GNSS}$.

Dans une mise en oeuvre de l'invention, la différence d'erreur de reconstruction du temps GNSS est réduite en imposant au second récepteur 4 de chaque station de réception de ne prendre en compte qu'une sélection spécifique d'un ou plusieurs satellites parmi une (ou plusieurs) constellation GNSS. Cette sélection peut changer au cours du temps. Le critère de sélection peut être automatiquement appliqué de manière autonome par chacune des stations.

Ce critère de sélection peut être de ne considérer que les N satellites de la constellation reçus avec l'élévation la plus élevée supérieure à une valeur minimum depuis l'ensemble des stations de réception.

Dans une autre mise en oeuvre, le second récepteur 4 de signaux GNSS peut générer un indicateur de qualité de réceptions des signaux en provenance des différents satellites des constellations GNSS. Dans ces conditions, le critère de sélection des satellites utilisés pour la synchronisation n'est appliqué qu'à des satellites pour lesquels les indicateurs de qualité de réception sont supérieurs à une valeur seuil pour l'ensemble des stations de réception. En particulier, si le critère de sélection est calculé de manière autonome par chaque station de réception, il peut être déterminé en utilisant des informations spécifiques du système global (coordonnées géographiques de chaque station par exemple), préalablement mise à disposition de chacune des stations.

Dans une autre mise en oeuvre, la sélection des satellites à utiliser pour la reconstruction du temps $t_{GNSS-a}$, $t_{GNSS-b}$, $t_{GNSS-c}$ est effectuée par la station principale 7 qui en informe chacune des stations. Cette sélection peut être effectuée a priori sur la base d'informations à la disposition de la station 7 (positions des stations de réception et éphémérides satellites de la ou des constellations GNSS utilisées) ou sur la base d'information mesurées par les différentes stations de réception. Enfin dans une dernière mise en oeuvre, le mode de sélection des satellites peut basculer d'un mode supervisé par la station 7 à un mode autonome, en particulier lors de rupture de connexion entre la station 7 et une ou plusieurs des stations de réception.

Enfin, dans le cas où plusieurs stations de réception sont impliquées dans la réception des signaux issus de l'émetteur, on veillera à ce que les satellites sélectionnées soient les mêmes pour toutes les stations, le critère de sélection des satellites est dans ce cas le même pour toutes les stations.

**Revendications**

**1.** Station de réception (1x) d'un système de traitement de signaux issus d'un émetteur (2) à localiser, la station de réception (1x) étant configurée pour acquérir d'une part des signaux issus de l'émetteur (2) à localiser et d'autre part des signaux issus d'au moins un système (5) de positionnement par satellites, comprenant :

un premier récepteur (3) configuré pour acquérir des signaux issus d'un émetteur (2) à localiser ;
un second récepteur (4) configuré pour acquérir des signaux issus d'un système (5) de positionnement par satellites ;
la station étant **caractérisée en ce que** le premier récepteur (3) et le second récepteur (4) sont cadencés par une même horloge (6) locale générant une base de temps locale ($t_{6-1a}$, $t_{6-1b}$, $t_{6-1c}$), les signaux acquis étant datés par ladite base de temps.

**2.** Station de réception (1a, 1b, 1c) selon la revendication 1, dans laquelle le second récepteur (4) est en outre configuré pour démoduler des signaux issus du système (5) de positionnement par satellites afin d'en extraire la base de temps absolue ($t_{GNSS-a}$, $t_{GNSS-b}$, $t_{GNSS-c}$) pour ensuite déterminer la différence ($\Delta 1a$, $\Delta 1b$, $\Delta 1c$) entre celle-ci et chaque base de temps locale ($t_{6-1a}$, $t_{6-1b}$, $t_{6-1c}$) afin de resynchroniser par rapport à ladite base de temps absolue les signaux ($S_{1a}$, $S_{1b}$, $S_{1c}$) issus de l'émetteur (2).

**3.** Station de réception (1a, 1b, 1c) selon la revendication 2, dans laquelle le premier récepteur (3) est configuré pour, à partir de la différence ($\Delta 1a$, $\Delta 1b$, $\Delta 1c$) entre la base de temps absolue ($t_{GNSS-a}$, $t_{GNSS-b}$, $t_{GNSS-c}$) et la base de temps locale, dater les signaux issus de l'émetteur par rapport à la base de temps absolue.

**4.** Station de réception (1a, 1b, 1c) selon la revendication 3, dans laquelle le premier récepteur (3) est configuré pour acquérir des portions des signaux issus de l'émetteur durant une période prédéfinie dans la base de temps absolue et pour les transmettre à une station de traitement (7), accompagnées des datations dans la base de temps absolue.

**5.** Station de réception selon l'une des revendications précédentes, dans laquelle le système (5) de positionnement par satellites comprenant au moins une constellation de satellite, chaque constellation comprenant une pluralité de satellites, et dans laquelle le second récepteur (4) est configuré pour sélectionner, selon un mode autonome ou supervisé, au moins un satellite parmi au moins une des constellations comprises par le système (5) de positionnement par satellites, les signaux acquis par le second récepteur (4) étant issus des satellites sélectionnés.

**6.** Station de réception selon la revendication 5, dans laquelle la sélection consiste à sélectionner, selon un mode autonome, au moins un satellite ayant une élévation supérieure à une valeur seuil, d'une constellation vue.

**7.** Station de réception selon la revendication 5, dans laquelle le second récepteur (4) est configuré pour générer un indicateur de qualité de réception des signaux issus d'un ou plusieurs satellite(s) d'une constellation vue, la sélection, selon un mode autonome, consistant à sélectionner au moins un satellite pour lequel l'indicateur de qualité est supérieure à une valeur seuil.

**8.** Station de réception selon la revendication 5, dans laquelle le second récepteur (4) est configuré pour recevoir, selon un mode supervisé, une information relative à la sélection d'un ou plusieurs satellites provenant d'une station de traitement (7).

**9.** Station de réception selon la revendication 8, dans laquelle le second récepteur (4) est configuré pour générer un indicateur de qualité des signaux issus d'un ou plusieurs satellite(s) d'une constellation vue, l'indicateur de qualité étant transmis à la station de traitement (7), l'information relative à la sélection d'un ou plusieurs satellites étant déterminée à partir de cet indicateur de qualité.

**10.** Système de traitement de signaux issus d'un émetteur (2) à localiser, ledit système de traitement comprenant :

au moins deux stations (1a, 1b, 1c) de réception selon l'une des revendications précédentes ;
une station (7) de traitement configurée pour traiter des signaux transmis et datés par les stations (1a, 1b, 1c) de réception.

**11.** Système de traitement selon la revendication 10, dans lequel le second récepteur de chacune des stations de réception est configuré pour sélectionner, selon un mode autonome, au moins un satellite, en visibilité de chacune des stations selon une élévation supérieure à une valeur seuil.

**12.** Système de traitement selon l'une des revendications 10 à 11, dans laquelle la station de traitement (7) comprend une unité de traitement (8) configurée pour calculer des écarts ($\Delta t1$) et/ou ($\Delta f1$) de réception en temps et/ou fréquence entre des portions de signaux identiques issus de l'émetteur entre au moins deux stations de réception.

**13.** Système de traitement selon l'une des revendications 10 à 12, dans laquelle l'unité de traitement (7) est en outre configurée pour, à partir des écarts de réception calculés, déterminer une localisation de l'émetteur (2) dont sont issus les signaux acquis.

**14.** Système de traitement selon l'une des revendications 10 à 13, dans lequel la station (7) de traitement est une des stations (1a, 1b, 1c) de réception.

**Patentansprüche**

1. Empfangsstation (1x) eines Systems zur Verarbeitung von Signalen, die von einem Sender (2), welcher lokalisiert werden soll, ausgegeben werden, wobei die Empfangsstation (1x) dazu ausgebildet ist, einerseits Signale zu erfassen, die von dem zu lokalisierenden Sender (2) ausgegeben werden, und andererseits Signale, die von mindestens einem Satellitenpositionierungssystem (5) ausgegeben werden, umfassend:

   einen ersten Empfänger (3), der dafür ausgebildet ist, Signale zu erfassen, die von einem zu lokalisierenden Sender (2) ausgegeben werden;
   einen zweiten Empfänger (4), der dafür ausgebildet ist, Signale zu erfassen, die von einem Satellitenpositionierungssystem (5) ausgegeben werden;
   wobei die Station **dadurch gekennzeichnet ist, dass** der erste Empfänger (3) und der zweite Empfänger (4) von ein und demselben lokalen Taktgeber (6) getaktet werden, der eine lokale Zeitbasis ($t_{6-1a}$, $t_{6-1b}$, $t_{6-1c}$) erzeugt, wobei die erfassten Signale mit der Zeitbasis datiert werden.

2. Empfangsstation (1a, 1b, 1c) nach Anspruch 1, wobei der zweite Empfänger (4) weiter dafür ausgebildet ist, Signale, die vom Satellitenpositionierungssystem (5) ausgegeben werden, zu demodulieren, um daraus die absolute Zeitbasis ($t_{GNSS-a}$, $t_{GNSS-b}$, $t_{GNSS-c}$) zu extrahieren, um anschließend die Differenz ($\Delta 1a$, $\Delta 1b$, $\Delta 1c$) zwischen derselben und jeder lokalen Zeitbasis ($t_{6-1a}$, $t_{6-1b}$, $t_{6-1c}$) zu bestimmen, um die vom Sender (2) ausgegebenen Signale ($S_{1a}$, $S_{1b}$, $S_{1c}$) in Bezug auf die absolute Zeitbasis neu zu synchronisieren.

3. Empfangsstation (1a, 1b, 1c) nach Anspruch 2, wobei der erste Empfänger (3) dafür ausgebildet ist, anhand der Differenz ($\Delta 1a$, $\Delta 1b$, $\Delta 1c$) zwischen der absoluten Zeitbasis ($t_{GNSS-a}$, $t_{GNSS-b}$, $t_{GNSS-c}$) und der lokalen Zeitbasis die vom Sender ausgegebenen Signale in Bezug auf die absolute Zeitbasis zu datieren.

4. Empfangsstation (1a, 1b, 1c) nach Anspruch 3, wobei der erste Empfänger (3) dafür ausgebildet ist, Teile der vom Sender ausgegebenen Signale während eines vordefinierten Zeitraums in der absoluten Zeitbasis zu erfassen und dafür, dieselben von den Datierungen in der absoluten Zeitbasis begleitet an eine Verarbeitungsstation (7) zu übertragen.

5. Empfangsstation nach einem der vorstehenden Ansprüche, wobei das Satellitenpositionierungssystem (5) mindestens eine Satellitenkonstellation umfasst, wobei jede Konstellation eine Vielzahl von Satelliten umfasst, und wobei der zweite Empfänger (4) dafür ausgebildet ist, nach einem autonomen oder überwachten Modus mindestens einen Satelliten aus mindestens einer der Konstellationen, die in dem Satellitenpositionierungssystem (5) umfasst sind, auszuwählen, wobei die vom zweiten Empfänger (4) erfassten Signale von den ausgewählten Satelliten ausgegeben werden.

6. Empfangsstation nach Anspruch 5, wobei das Auswählen darin besteht, nach einem autonomen Modus mindestens einen Satelliten aus einer betreffenden Konstellation auszuwählen, der eine Elevation aufweist, welche höher als ein Schwellenwert ist.

7. Empfangsstation nach Anspruch 5, wobei der zweite Empfänger (4) dafür ausgebildet ist, einen Empfangsqualitätsanzeiger der von einem oder mehreren Satelliten einer betreffenden Konstellation ausgegebenen Signale zu erzeugen, wobei das Auswählen nach einem autonomen Modus darin besteht, mindestens einen Satelliten auszuwählen, für den der Qualitätsanzeiger höher als ein Schwellenwert ist.

8. Empfangsstation nach Anspruch 5, wobei der zweite Empfänger (4) dafür ausgebildet ist, nach einem überwachten Modus eine von einer Verarbeitungsstation (7) stammende Information zu empfangen, die sich auf die Auswahl von einem oder mehreren Satelliten bezieht.

9. Empfangsstation nach Anspruch 8, wobei der zweite Empfänger (4) dafür ausgebildet ist, einen Qualitätsanzeiger der von einem oder mehreren Satelliten einer betreffenden Konstellation ausgegebenen Signale zu erzeugen, wobei der Qualitätsanzeiger an die Verarbeitungsstation (7) übertragen wird, wobei die Information, die sich auf die Auswahl von einem oder mehreren Satelliten bezieht, anhand dieses Qualitätsanzeigers bestimmt wird.

10. System zur Verarbeitung von Signalen, die von einem zu lokalisierenden Sender (2) ausgegeben werden, wobei das Verarbeitungssystem umfasst:

mindestens zwei Empfangsstationen (1a, 1b, 1c) nach einem der vorstehenden Ansprüche;

eine Verarbeitungsstation (7), die dafür ausgebildet ist, von den Empfangsstationen (1a, 1b, 1c) übertragene und datierte Signale zu verarbeiten.

11. Verarbeitungssystem nach Anspruch 10, wobei der zweite Empfänger jeder der Empfangsstationen dafür ausgebildet ist, nach einem autonomen Modus mindestens einen Satelliten in Sichtlinie jeder der Stationen nach einer Elevation auszuwählen, die höher als ein Schwellenwert ist.

12. Verarbeitungssystem nach einem der Ansprüche 10 bis 11, wobei die Verarbeitungsstation (7) eine Verarbeitungseinheit (8) umfasst, die dafür ausgebildet ist, zeit- und/oder frequenzmäßige Empfangsabweichungen ($\Delta t1$) und/oder ($\Delta f1$) zwischen vom Sender ausgegebenen identischen Signalteilen zwischen mindestens zwei Empfangsstationen zu berechnen.

13. Verarbeitungssystem nach einem der Ansprüche 10 bis 12, wobei die Verarbeitungseinheit (7) weiter dafür ausgebildet ist, anhand der berechneten Empfangsabweichungen eine Position des Senders (2), von dem die erfassten Signale ausgegeben werden, zu bestimmen.

14. Verarbeitungssystem nach einem der Ansprüche 10 bis 13, wobei die Verarbeitungsstation (7) eine der Empfangsstationen (1a, 1b, 1c) ist.

## Claims

1. Station for receiving (1x) a system for processing signals coming from a localiser transmitter (2), the receiving station (1x) being configured to acquire, on the one hand, signals coming from the localiser transmitter (2) and, on the other hand, signals coming from at least one satellite positioning system (5), comprising:

a first receiver (3) configured to acquire signals coming from a localiser transmitter (2);

a second receiver (4) configured to acquire signals coming from a satellite positioning system (5);

the station being **characterised in that** the first receiver (3) and the second receiver (4) are paced by one same local clock (6) generating a local time base ($t_{6-1a}$, $t_{6-1b}$, $t_{6-1c}$), the acquired signals being dated by said time base.

2. Receiving station (1a, 1b, 1c) according to claim 1, wherein the second receiver (4) is further configured to demodulate the signals coming from the satellite positioning system (5) in order to extract the absolute time base from it ($t_{GNSS-a}$, $t_{GNSS-b}$, $t_{GNSS-c}$) to then determine the difference ($\Delta 1a$, $\Delta 1b$, $\Delta 1c$) between this and each local time base ($t_{6-1a}$, $t_{6-1b}$, $t_{6-1c}$) in order to resynchronise with respect to said absolute time base, the signals ($S_{1a}$, $S_{1b}$, $S_{1c}$) coming from the transmitter (2) .

3. Receiving station (1a, 1b, 1c) according to claim 2, wherein the first receiver (3) is configured to, from the difference ($\Delta 1a$, $\Delta 1b$, $\Delta 1c$) between the absolute time base ($t_{GNSS-a}$, $t_{GNSS-b}$, $t_{GNSS-c}$) and the local time base, date the signals coming from the transmitter with respect to the absolute time base.

4. Receiving station (1a, 1b, 1c) according to claim 3, wherein the first receiver (3) is configured to acquire portions of signals coming from the transmitter during a predefined period in the absolute time base and to transmit them to a processing station (7), accompanied by datings in the absolute time base.

5. Receiving station according to one of the preceding claims, wherein the satellite positioning system (5) comprising at least one satellite constellation, each constellation comprising a plurality of satellites, and wherein the second receiver (4) is configured to select, according to an autonomous or supervised mode, at least one satellite from among at least one of the constellation comprised by the satellite positioning system (5), the signals acquired by the second receiver (4) coming from the selected satellites.

6. Receiving station according to claim 5, wherein the selection consists of selecting, according to an autonomous mode, at least one satellite having an elevation greater than a threshold value, of a seen constellation.

7. Receiving station according to claim 5, wherein the second receiver (4) is configured to generate a quality indicator for receiving signals coming from one or more satellite(s) of a seen constellation, the selection, according to an autonomous mode, consisting of selecting at least one satellite for which the quality indicator is greater than a threshold value.

8. Receiving station according to claim 5, wherein the second receiver (4) is configured to receive, according to a supervised mode, an item of information relating to the selection of one or more satellites coming from a processing station (7).

9. Receiving station according to claim 8, wherein the second receiver (4) is configured to generate a quality indicator of the signals coming from one or more satellite(s) of a seen constellation, the quality indicator being transmitted to the processing station (7), the item of information relating to the selection of one or more satellites being determined from this quality indicator.

10. System for processing signals coming from a localiser transmitter (2), said processing system comprising:

   at least two receiving stations (1a, 1b, 1c) according to one of the preceding claims;
   a processing station (7) configured to process signals transmitted and dated by the receiving stations (1a, 1b, 1c).

11. Processing system according to claim 10, wherein the second receiver of each one of the receiving stations is configured to select, according to an autonomous mode, at least one satellite, that can be viewed from each one of the station according to an elevation greater than a threshold value.

12. Processing system according to one of claims 10 to 11, wherein the processing station (7) comprising a processing unit (8) configured to calculate differences ($\Delta$t1) and/or ($\Delta$f1) for receiving in time and/or frequency between the portions of identical signals coming from the transmitter between at least two receiving stations.

13. Processing system according to one of claims 10 to 12, wherein the processing unit (7) is further configured to, from the calculated receiving differences, determine a localisation of the transmitter (2) from which the acquired signals come.

14. Processing system according to one of claims 10 to 13, wherein the processing station (7) is one of the receiving stations (1a, 1b, 1c).

# FIG. 1

# FIG. 2

31

1x (x={a,b,c})

42

tGNSS-x

Δ1x

S1x
T1x

3

4

t61x

6

# FIG. 3

31

1x (x={a,b,c})

42

tGNSS-x

h3

S1x
T1x

3

h4

4

**EP 3 289 377 B1**

**RÉFÉRENCES CITÉES DANS LA DESCRIPTION**

**Documents brevets cités dans la description**

- WO 2004059338 A